# EUROPEAN PATENT APPLICATION

(11) **EP 2 518 998 A2**
(43) Date of publication of application: **31.10.2012**
(21) Application number: 10839793.6
(22) Date of filing: 23.12.2010
(51) Int. Cl.: H04N 5/262, H04N 5/225

(54) **METHOD, SYSTEM, AND COMPUTER-READABLE RECORDING MEDIUM FOR ADAPTIVELY PERFORMING IMAGE-MATCHING ACCORDING TO CONDITIONS**

(30) Priority: 24.12.2009 KR 20090131220
(71) Applicant: Olaworks, Inc., Seoul 135-919 (KR)
(72) Inventor: KIM, Tae Hoon, Seongnam-si Gyeonggi-do 463-708 (KR); RYU, Jung Hee, Seoul 134-772 (KR); JU, Chan Jin, Seoul 151-015 (KR)
(74) Representative: Metzler, Volker
(86) International application number: PCT/KR2010/009258
(87) International publication number: WO 2011/078596

(57) **Abstract**

The present invention relates to a method for adaptively performing an image matching process according to a situation. The method includes the steps of: (a) recognizing the situation of a subject included in an inputted image; and (b) selecting an image group including at least one image to be compared with the inputted image of the subject for the image matching process among multiple images stored on a database, as a qualified reference image group, according to the recognized situation; wherein the images included in the qualified reference image group are dynamically changed according to the recognized situation.

## Description

The present invention relates to a method, a system and a computer-readable recording medium for performing image matching by referring to various situations; and more particularly, to the method, the system and the computer-readable recording medium for performing the image matching for a subject included in an inputted image more precisely and more rapidly by recognizing the situations, including a photographing distance, a photographing place, a photographing time zone, etc., of the subject and by adaptively deciding a qualified reference image(s) to be compared with the inputted image of the subject during the image matching process among all the reference images in a database according to the recognized situations.

Recently, due to more intelligent functions of photographing devices including digital cameras and mobile phones with which images can be taken, users have had higher expectations for their artificial intelligence. Particularly, a subject recognition function for recognizing a subject, e.g., a human's face, a building, etc., appearing in an image has been embedded as a basic function of such photographing devices. In consideration of limited computational speed of mobile camera devices in which high performance microprocessors are difficult to be embedded and computational loads due to other processors which must be fundamentally run in such devices, a more effective subject recognition technology is required.

As a technology for recognizing a subject included in an image, an image matching technique which compares the subject detected in the image with a reference image(s) in a database and then decides an optimal reference image (s) including what is most similar to the subject as a matching result is generally used.

According to the conventionally introduced image matching technique, since the image matching must be performed between the image of the subject and all the reference images in the database, regardless of types of the subject (e.g., a face of a person taken in a near range, a building taken in a far range, etc.), the amount of computation increases and the matching speed is slow down.

Accordingly, a new image matching technology for improving a degree of accuracy in the subject recognition and simultaneously speeding up recognition of the subject included in the image is required to recognize the subject therein more effectively.

It is, therefore, an object of the present invention to solve all the problems mentioned above.

It is another object of the present invention to recognize a situation(s) of a subject for the image matching, such as a photographing distance, a photographing place, a photographing time zone and the like, and therefore adaptively decide a qualified reference image (s) to be compared with an inputted image of a subject during the image matching process among all the reference image (s) in the database.

In accordance with one aspect of the present invention, there is provided a method for adaptively performing an image matching process according to a situation, including the steps of: (a) recognizing the situation of a subject included in an inputted image; and (b) selecting an image group including at least one image to be compared with the inputted image of the subject for the image matching process among multiple images stored on a database, as a qualified reference image group, according to the recognized situation; wherein the images included in the qualified reference image group are dynamically changed according to the recognized situation.

In accordance with another aspect of the present invention, there is provided a system for adaptively performing an image matching process according to a situation, including: a situation recognizing part for recognizing the situation of a subject included in an inputted image; and a qualified reference image deciding part for selecting an image group including at least one image to be compared with the inputted image of the subject for the image matching progress among multiple images stored on a database, as a qualified reference image group, according to the recognized situation; wherein the images included in the qualified reference image group are dynamically changed according to the recognized situation.

The above and other objects and features of the present invention will become apparent from the following description of preferred embodiments given in conjunction with the accompanying drawings, in which:
Figs. 1 and 2 are diagrams exemplarily illustrating an internal configuration of an image matching system in accordance with an example embodiment of the present invention.
Fig. 3 is a diagram exemplarily showing a subject included in an inputted image in accordance with an example embodiment of the present invention.
Figs. 4 and 5 are drawings exemplarily representing an image including each subject taken, respectively, in day time and night time in accordance with an example embodiment of the present invention.
Fig. 6 is a diagram exemplarily representing a configuration for determining a reference image(s) in accordance with an example embodiment of the present invention.

The detailed description of the present invention illustrates specific embodiments in which the present invention can be performed with reference to the attached drawings.

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The configurations of the present invention for accomplishing the objects of the present invention are as follows:

Herein, a reference image(s) means an image(s) stored in a database used for an image matching process. The reference image (s) may be compared with an inputted image of a subject during the image matching process to thereby retrieve an optimal reference image (s) including what is similar to the subject as a result of the image matching process.

Furthermore, the inputted image may be digital data which has been completely taken or which is shown on the screen at a preview state before the image is actually taken.

### Configuration of Image Matching System

Below is a detailed explanation on an internal configuration and components of an image matching system which perform their important functions for implementing the present invention.

In accordance with an example embodiment of the present invention, a device which has a memory means and a micro processor with a calculation ability, such as a personal computer (e.g., desktop, laptop, etc.), a server, a workstation, a PDA, a web pad, a cellular phone, or a camera device, may be adopted as the image matching system 100.

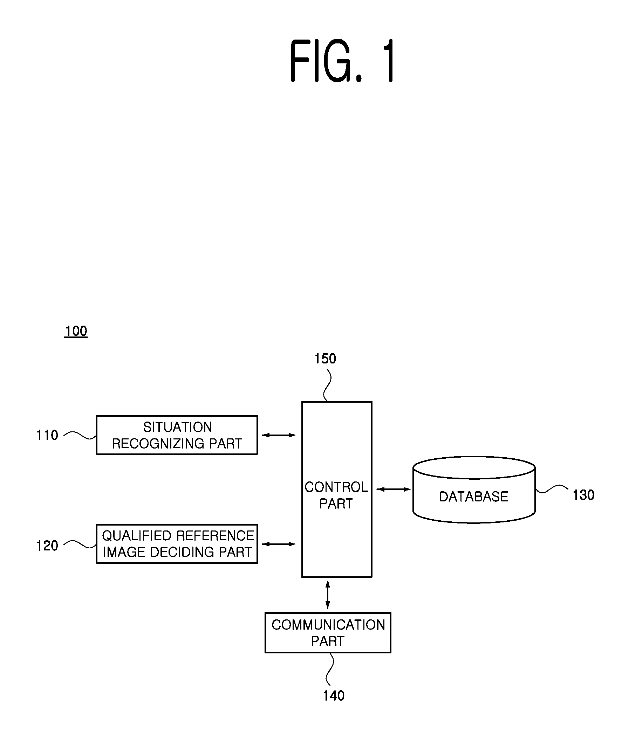

Fig. 1 is a diagram exemplarily illustrating the internal configuration of the image matching system in accordance with an example embodiment of the present invention.

By referring to Fig. 1, the image matching system 100 in accordance with an example embodiment of the present invention may include a situation recognizing part 110, a qualified reference image deciding part 120, a database 130, a communication part 140 and a control part 150. In accordance with an example embodiment of the present invention, at least some of the situation recognizing part 110, the qualified reference image deciding part 120, the database 130, the communication part 140 and the control part 150 may be program modules communicating with an external system (non-illustrated). The program modules may be included in the image matching system 100 in a form of an operating system, an application program module and other program modules and may also be stored on several memory devices physically. Furthermore, the program modules may be stored on remote memory devices communicable to the image matching system 100. The program modules may include but not be subject to a routine, a subroutine, a program, an object, a component, and a data structure for executing a specific operation or a type of specific abstract data that will be described later in accordance with the present invention.

First, the situation recognizing part 110 in accordance with an example embodiment of the present invention may perform a function of recognizing a situation(s) of a subject included in an inputted image. In short, it may recognize the situation(s) including a distance between a location at which the subject is taken and an actual location of the subject, the place where the subject is taken, a time zone when the subject is taken, etc. to thereby support the qualified reference image deciding part 120 to adaptively determine an appropriate reference image(s), i.e., a so-called qualified reference image(s), to be compared with the inputted image of the subject during the image matching process.

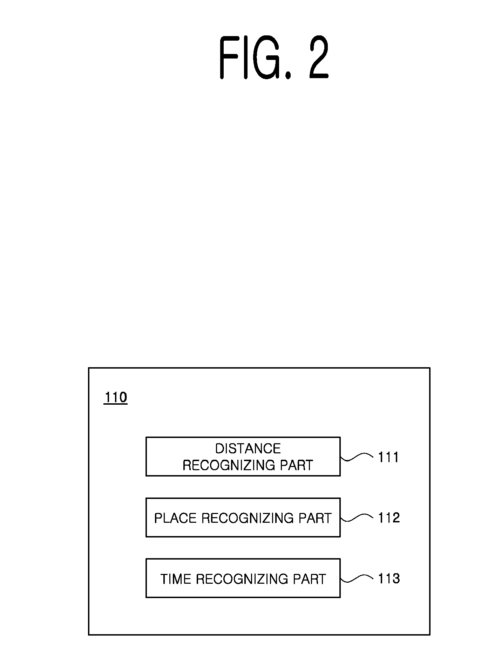

By referring to Fig. 2, the situation recognizing part 110 in accordance with an example embodiment of the present invention may include a distance recognizing part 111, a place recognizing part 112 and a time recognizing part 113.

With respect to the inputted image including the subject, the distance recognizing part 111 may perform a function of recognizing the distance between the photographing location of the subject and the actual location thereof.

In general, the distance between the photographing location of the subject and the actual location thereof may be dependent on a type of the subject. For example, subjects of small sizes such as pens and books have a high tendency of being taken at a near range within one meter and subjects of medium sizes such as persons and vehicles have a high tendency of being taken at a range from one 1 to 10 meters. In addition, subjects of large sizes such as buildings and landscapes have a high tendency of being taken at a place tens or hundreds of meters far from the photographing place.

Moreover, if the image matching process is performed for a subject taken mainly at a near range or a medium range, including a person, a vehicle, etc., a planar-type image matching technique such as an affine transform may be available because a depth of the subject is not high. However, in case of the image matching process for a subject of large size taken mainly in a long distance such as a building, a landscape, etc., the affine transform or the like may not be available because the depth of the subject is high. Instead, a nonplanar-type matching technique (e.g., matching process in use of street view) which refers to repetitive patterns included in the subject (e.g., multiple windows included in the building) may be applied.

If the qualified reference images are adaptively decided or a different image matching technique is applied according to a distance of the subject in consideration of the aforementioned tendency, the image matching process for the subject may be effectively performed. For this, the distance recognizing part 111 in accordance with an example embodiment of the present invention may recognize the distance between the photographing location of the subject and the actual location thereof.

As mentioned above, a distance recognition technology must be used to make the distance recognizing part 111 recognize the distance between the photographing location of the subject included in the inputted image and the actual location thereof. As the distance recognition technology, an article titled "Depth Estimation Using Monocular and Stereo Cues" authored by Ashutosh Saxena and two others may be referred to (The whole content of the article may be considered to have been combined herein). In the article, the method for measuring a depth of a monocular image or a stereo image is described by using information on change in texture of a photographed image, blurring, focal change, a known size of a specific subject, etc. Of course, the distance recognition technology applicable to the present invention will not be limited only to the technology described herein and it will be able to reproduce the present invention by applying various examples.

In accordance with an example embodiment of the present invention, as the distance recognition technology for recognizing the distance of the subject, a technology for recognizing the distance between the photographing location and the actual location of the subj ect by referring to a degree of changes in the subject's location, size, etc. in the inputted image according to the detailed movement of the photographing devices may also be considered. In other words, the size, the location, etc. of the subject which is located relatively nearer to the photographing location may be relatively much changed in the photographed image according to the movement of the photographing device but the size or the location of the subject located far away from the photographing location may be relatively less changed in the photographed image according to the movement of the photographing device. In consideration of the points, it will be possible to recognize the distance between the photographing location of the subject and the actual location thereof.

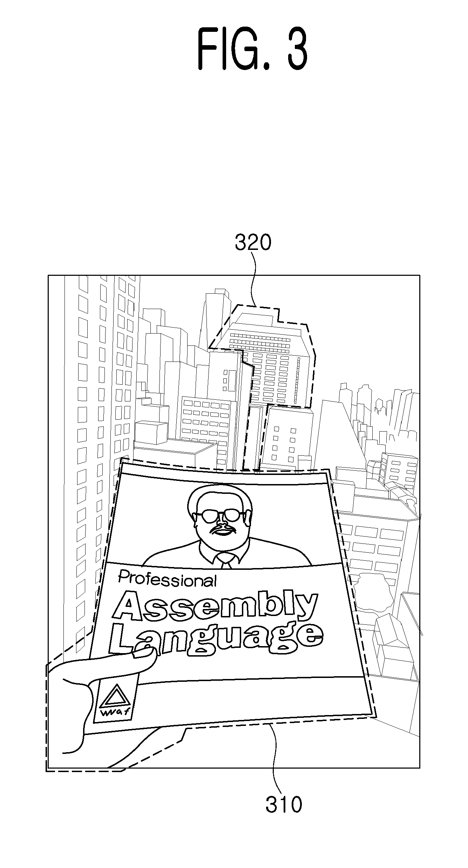

Fig. 3 is a diagram exemplarily showing the subject included in the inputted image in accordance with an example embodiment of the present invention.

By referring to Fig. 3, the inputted image may include a book 310, as a subject, which is located in relatively near proximity of a photographing location and a building 320, as that, which is located in relatively far proximity thereof. The distance recognizing part 111 in accordance with an example embodiment of the present invention may estimate and recognize a distance between the photographing location and the book 310 and that between the photographing location and the building 320 to thereby adaptively determine a first qualified reference image(s) to be compared with a first region of the inputted image which includes the book 310 and a second qualified reference image(s) to be compared with a second region of the inputted image which includes the building 320.

Next, the place recognizing part 112 may perform a function of recognizing a place at which the subject is photographed (i.e., a type of a photographing place of the subject). From empirical cases, an image taken in a specific place may include a subject with a high possibility of being at the specific place. For example, while images taken indoors have high possibilities of including a subject(s) such as a desk or the like, the images taken outdoors may have high possibilities of including a subject(s) such as a mountain, a sea, a building and so on. While those taken underground have high possibilities of including a subject (s) such as a lighting fitting, an elevator or the like, those taken on the ground may have high possibilities of including a subject(s) such as a building, an automobile, etc.

In consideration of the aforementioned situations, if a qualified reference image(s) is adaptively decided according to information on a place where the subject is taken (i.e., a type of a photographing place of the subject), the image matching process for the subject may be more effectively performed. For this, the place recognizing part 112 in accordance with an example embodiment of the present invention may recognize the photographing place of the subject.

As mentioned above, a place recognition technology must be used to recognize the place at which the inputted image of the subject is taken (i.e., a type of the photographing place of the subject) by the place recognizing part 112. As the place recognition technology, an article titled "Recognizing Indoor Scenes" co-authored by Ariadna Quattoni and one other and published in IEEE Conference on Computer Vision and Pattern Recognition (CVPR) in 2009 will be referred to (The whole content of the article may be considered to have been combined herein). The article describes how to recognize a scene pictured by an image in consideration of an overall characteristic of an image or a type of a subject therein. Of course, the place recognition technology applicable to the present invention is not limited only to the method described in the article and it will be able to reproduce the present invention by applying various examples.

As another example of a method for recognizing a place where the subject is taken (i.e., a type of the photographing place of the subject), the place recognizing part 112 in accordance with an example embodiment of the present invention may recognize the photographing place of the subject (i.e., the location of the subject) by referring to a wireless signal (e.g., a GPS signal, etc.) received by a camera device. For instance, if a strength of wireless signal of GPS or the like exceeds a prefixed value, the place is determined to be on the ground or outdoors and if it is less than the prefixed value, the place may be determined to be underground or indoors. Besides, whether the subject is underground or indoors may be determined by checking how strong natural light or the like is.

In accordance with an example embodiment of the present invention, the time recognizing part 113 may conduct a function of recognizing a time zone when the subject is taken. In general, even if there are images including an identical subject respectively, the respective appearances of the identical subject appearing in the images taken in day time and in night time may be largely different. In consideration of the aforementioned situations, the time recognizing part 113 in accordance with an example embodiment of the present invention may recognize when the subject is taken in order to perform the image matching process more effectively by adaptively deciding a qualified reference image(s) to be compared with the inputted image of the subject during the image matching process among all the reference images in the database 130 according to the photographing time of the subject.

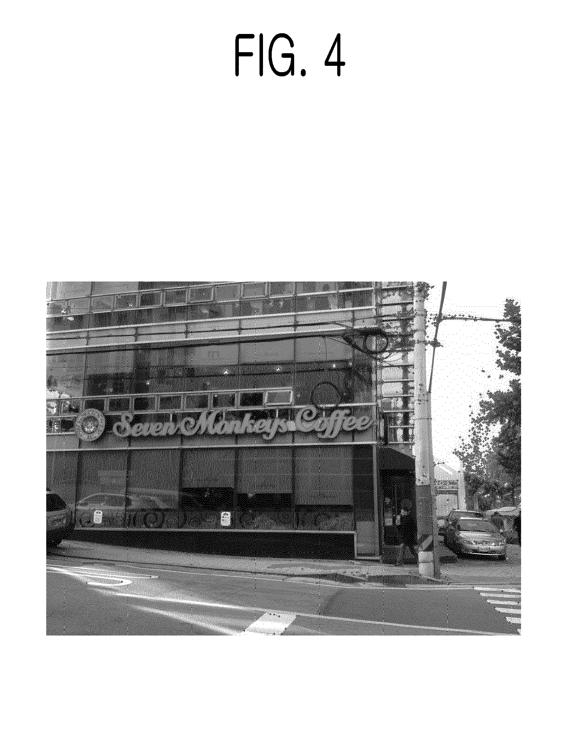

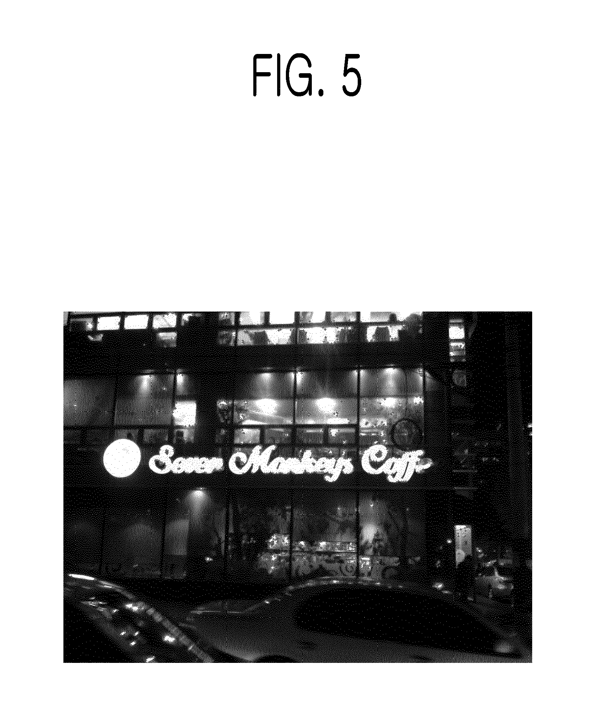

Figs. 4 and 5 are drawings exemplarily representing the images including the identical subject taken, respectively, in day time and night time in accordance with an example embodiment of the present invention.

The features of the subjects detected from the respective images of Figs. 4 and 5 are displayed in red cross marks. By referring to Figs. 4 and 5, even if the identical subject is included in the respective images taken in day time and in night time, it can be confirmed that the features of the subject appearing in the image taken in the day time are different from those in the night time.

The qualified reference image deciding part 120 in accordance with an example embodiment of the present invention may perform a function of adaptively determining a qualified reference image(s) to be compared with the inputted image of the subject among the reference images in the database 130 depending on the situation(s) (or the condition(s)) of the subject recognized by the situation recognizing part 110. In short, the qualified reference image deciding part 120 in accordance with an example embodiment of the present invention may decide only an image (s) corresponding to the situation(s) among the multiple images stored on the database 130 as the qualified reference image (s) to be used for the image matching process, to thereby allow the result of the image matching process to be more rapidly drawn.

More preferably, the qualified reference image deciding part 120 in accordance with an example embodiment of the present invention may determine the qualified reference images based on the distance between the photographing location of the subject and the actual location thereof. For example, in case of a subject taken in a near range, a reference image(s) with a high possibility of having been taken at a near range, such as a pen, a book and a person, etc. among the multiple reference images stored on the database 130, on one hand, may be determined as the qualified reference image(s). In case of a subject taken at a far range, that (those) with a high possibility of having been taken at a far range, such as a building, a landscape, etc. among the multiple reference images stored on the database 130, on the other hand, may be determined as the qualified reference image (s). Herein, on assumption that a distance from the photographing point is a variable, the state of distance range being divided into two (i.e., near and far ranges) was mentioned as an example, but it is not limited only to this. For example, it may be explained as an example that the distance range may be divided into three as shown below. Specifically, as a qualified reference image(s) to be compared with an inputted image of a subject "A" recognized to be located within one meter from a photographing point, a reference image(s) which includes a subject of small size, such as a pen, a book or the like, with a high possibility of having been taken at a near range of roughly one meter may be selected. In addition, as a qualified reference image(s) to be compared with an inputted image of a subject "B" recognized to be located within a range between 1 meter and 10 meters from the photographing point, a reference image (s) which includes a subject of medium size, such as a person, a vehicle or the like, with a high possibility of having been taken at the range between 1 meter and 10 meters from the photographing point may be selected. As well, as a qualified reference image (s) to be compared with an inputted image of a subject "C" recognized to be located at the range exceeding 10 meters from the photographing point,, a reference image(s) which includes a subject of large size, such as a building, a landscape or the like, with a high possibility of having been taken in a far range exceeding tens or hundreds of meters may be selected.

In addition, the qualified reference image deciding part 120 in accordance with an example embodiment of the present invention may decide a qualified reference image (s) based on a type of a place at which the subject was taken. For instance, with respect to a subject taken underground, an image(s) with a low possibility of having been taken underground such as an image of a ground building among the multiple reference images stored on the database 130 may be excluded from the qualified reference image(s). Regarding a subject taken indoors, an image (s) with a low possibility of having been taken indoors such as an image of a vehicle among the multiple reference images stored on the database 130 may be excluded from the qualified reference image(s).

Besides, the qualified reference image deciding part 120 in accordance with an example embodiment of the present invention may determine a qualified reference image(s) based on a time when the subject was taken. For instance, with respect to a subject taken in day time, an image(s) taken in the day time among the multiple reference images stored on the database 130 may be determined as the qualified reference image(s). Regarding a subject taken in night time, an image(s) taken in the night time among the multiple reference images stored thereon may be determined as the qualified reference image(s).

To make the above-mentioned configuration of the qualified reference image deciding part 120 possible, the database 130 in accordance with an example embodiment of the present invention may store the multiple reference images liked with information on the respective situations corresponding thereto and more particularly, respective images may be stored on the database 130 differentially according to information on their corresponding situations. Herein, the information on the situations, which is linked with the respective reference images and stored, may include a photographing distance, a photographing place, a photographing time zone and the like. In accordance with the present invention, the database 130 is a concept of a database not only in a narrow meaning but also in a broad meaning which include data records, etc. based on computer file systems. From the aspect, it must be understood that, even a set of simple operation processing logs may be the database(s) in the present invention if data can be extracted from the set. In addition, the database 130 in accordance with an example embodiment of the present invention may be configured inclusively in, or separately from, the image matching system 100 by those skilled in the art.

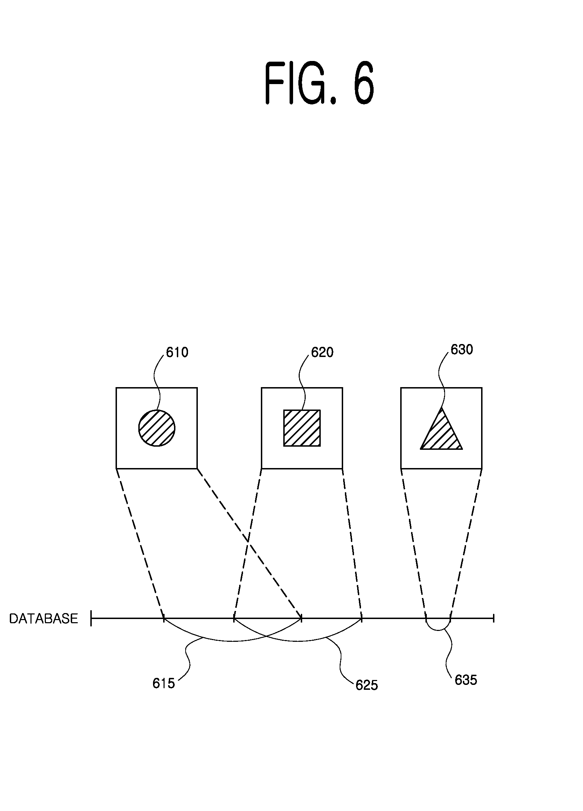

Fig. 6 is a diagram exemplarily representing a configuration for determining the qualified reference image (s) in accordance with an example embodiment of the present invention.

By referring to Fig. 6, it may be assumed that the image matching process is performed for subjects A 610, B 620 and C 630 respectively included in three different inputted images. More concretely, by referring to Fig. 6, with respect to the subject A 610 taken in a range of 50 centimeters, images in a section 615 which include a subject (s) with a higher possibility of having been taken in a near range than a prefixed threshold, such as a pen or a book, among the multiple reference images in the database 130 may be determined as the qualified reference images. Continuously by referring to Fig. 6, with respect to the subject B 620 taken on the ground, images in a section 625 which include a subject(s) with a higher possibility of having been taken on the ground than the prefixed threshold, such as a building or a landscape, thereamong may be determined as the qualified reference images. Also by referring to Fig. 6, as for the subject C 630 taken in a time zone between 15:00 and 18:00, some images in a section 635 which include a subject(s) taken in the time zone thereamong may be determined as the qualified reference images.

Next, the communication part 140 in accordance with an example embodiment of the present invention may perform a function of instructing the image matching system 100 to communicate with a mobile communication server (non-illustrated), a web server (non-illustrated) or other external devices.

Lastly, the control part 150 in accordance with an example embodiment of the present invention may perform a function of controlling data flow among the situation recognizing part 110, the qualified reference image deciding part 120, the database 130 and the communication part 140. Briefly, the control part 150 may control the flow of data from outside or among the components of the image matching system and allow the situation recognizing part 110, the qualified reference image deciding part 120, the database 130 and the communication part 140 to perform their unique functions.

In accordance with the present invention, in case the image matching process for the subject included in the image is performed, only part of images may be adaptively selected among all the reference images on the database 130 as the qualified reference images according to the situations such as the subject's photographing distance, photographing place, photographing time zone and the like. Therefore, it is possible to allow the image matching for the subject to be performed more precisely and more rapidly.

The embodiments of the present invention can be implemented in a form of executable program command through a variety of computer means recordable to computer readable media. The computer readable media may include solely or in combination, program commands, data files and data structures. The program commands recorded to the media may be components specially designed for the present invention or may be usable to a skilled person in a field of computer software. Computer readable record media include magnetic media such as hard disk, floppy disk, magnetic tape, optical media such as CD-ROM and DVD, magneto-optical media such as floptical disk and hardware devices such as ROM, RAM and flash memory specially designed to store and carry out programs. Program commands include not only a machine language code made by a complier but also a high level code that can be used by an interpreter etc., which is executed by a computer. The aforementioned hardware device can work as more than a software module to perform the action of the present invention and they can do the same in the opposite case.

While the invention has been shown and described with respect to the preferred embodiments, it will be understood by those skilled in the art that various changes and modification may be made without departing from the spirit and scope of the invention as defined in the following claims.

Accordingly, the thought of the present invention must not be confined to the explained embodiments, and the following patent claims as well as everything including variations equal or equivalent to the patent claims pertain to the category of the thought of the present invention.

## Claims

1. A method for adaptively performing an image matching process according to a situation, comprising the steps of:
(a) recognizing the situation of a subject included in an inputted image; and
(b) selecting an image group including at least one image to be compared with the inputted image of the subject for the image matching process among multiple images stored on a database, as a qualified reference image group, according to the recognized situation;
wherein the images included in the qualified reference image group are dynamically changed according to the recognized situation.

2. The method of claim 1, wherein the situation of the subject includes at least one of following parameters: a distance between a photographing location of the subject and an actual location thereof, a type of a photographing place thereof, and a photographing time thereof.

3. The method of claim 1, wherein, at the step (a), a scope of distance corresponding to a distance between the photographing location of the subject and an actual location thereof is recognized, and, at the step (b), at least one image corresponding to the recognized scope of distance is selected to be included in the qualified reference image group among the images stored on the database.

4. The method of claim 3, wherein, at the step (b), the qualified reference image group to be used for the image matching process includes an image(s) of a subject(s) with a higher probability of having been taken at a range included in the recognized scope of distance than a prefixed threshold.

5. The method of claim 1, wherein, at the step (a), a scope of place corresponding to a photographing place of the inputted image is recognized, and, at the step (b), at least one image corresponding to the recognized scope of place is selected to be included in the qualified reference image group among the images stored on the database.

6. The method of claim 5, wherein the photographing place of the subject is recognized based on strength of GPS (global positioning system) signal received by a photographing device.

7. The method of claim 5, wherein, at the step (b), the qualified reference image group includes an image(s) of a subject(s) with a higher probability of having been taken at the recognized scope of place than a prefixed threshold.

8. The method of claim 1, wherein, at the step (a), a scope of time corresponding to a photographing time of the inputted image is recognized, and, at the step (b), at least one image corresponding to the recognized scope of time is selected to be included in the qualified reference image group among the images stored on the database.

9. The method of claim 1, wherein the inputted image includes at least one of images having been taken and that shown on a screen at a preview state before being taken.

10. The method of claim 1, before the step (a), further comprising the step of: building the database on which at least one image linked with information on the situation is stored.

11. A system for adaptively performing an image matching process according to a situation, comprising:
a situation recognizing part for recognizing the situation of a subject included in an inputted image; and
a qualified reference image deciding part for selecting an image group including at least one image to be compared with the inputted image of the subject for the image matching progress among multiple images stored on a database, as a qualified reference image group, according to the recognized situation;
wherein the images included in the qualified reference image group are dynamically changed according to the recognized situation.

12. The system of claim 11, wherein the situation of the subject includes at least one of following parameters: a distance between a photographing location of the subject and an actual location thereof, a type of a photographing place thereof, and a photographing time thereof.

13. The system of claim 11, wherein the situation recognizing part recognizes a scope of distance corresponding to a distance between the photographing location of the subject and the actual location thereof; and the qualified reference image deciding part selects at least one image corresponding to the recognized scope of distance to be included in the qualified reference image group among the images stored on the database.

14. The system of claim 13, wherein the qualified reference image group to be used for the image matching process includes an image (s) of a subject(s) with a higher probability of having been taken at a range included in the recognized scope of distance than a prefixed threshold.

15. The system of claim 11, wherein the situation recognizing part recognizes a scope of place corresponding to a photographing place of the inputted image and the qualified reference image deciding part selects at least one image corresponding to the recognized scope of place to be included in the qualified reference image group among the images stored on the database.

16. The system of claim 15, wherein the situation recognizing part recognizes the photographing place of the subject based on strength of GPS (global positioning system) signal received by a photographing device.

17. The system of claim 15, wherein the qualified reference image group includes an image (s) of a subject (s) with a higher probability of having been taken at the recognized scope of place than a prefixed threshold.

18. The system of claim 11, wherein the situation recognizing part recognizes a scope of time corresponding to a photographing time of the inputted image and the qualified reference image deciding part selects at least one image corresponding to the recognized scope of time to be included in the qualified reference image group among the images stored on the database.

19. The system of claim 11, wherein the inputted image includes at least one of images having been taken and that shown on a screen at a preview state before being taken.

20. The system of claim 11, wherein the database on which at least one image linked with information on the situation is stored.

21. A medium recording a computer readable program to execute the method of any one of claims 1 to 10.
